# EUROPÄISCHE PATENTSCHRIFT

(11) **EP 1 497 506 B1**
(45) Veröffentlichungstag und Bekanntmachung des Hinweises auf die Patenterteilung: **05.10.2005**
(21) Anmeldenummer: 03769019.5
(22) Anmeldetag: 16.10.2003
(51) Int. Cl.: E04C 2/52, F24D 3/14

(54) **GEBÄUDE MIT BEHEIZTEN HOHLWANDELEMENTEN**
BUILDING MADE OF WALL HOLLOW HEATED ELEMENTS
BATIMENT A ELEMENTS DE MUR CREUX CHAUFFES

(30) Priorität: 11.11.2002 AT 16952002
(43) Veröffentlichungstag der Anmeldung: 19.01.2005
(73) Patentinhaber: Griffner, Ari, 9421 Eitweg (AT)
(72) Erfinder: Griffner, Ari, 9421 Eitweg (AT)
(74) Vertreter: Beer, Manfred
(86) Internationale Anmeldenummer: PCT/AT2003/000314
(87) Internationale Veröffentlichungsnummer: WO 2004/044341

(56) Entgegenhaltungen:
- WO-A-02/22975
- WO-A-95/00722
- DE-A- 2 244 073
- DE-A- 3 217 617
- DE-A- 19 735 298
- DE-A- 19 848 003
- US-B1- 6 283 382

## Beschreibung

Die Erfindung betrifft ein Gebäude aus Außenwandelementen, Dachelementen sowie ggf. Deckenelementen, wobei wenigstens die Außenwandelemente zweischalig ausgebildet sind und Platten aufweisen, die miteinander unter Ausbildung wenigstens eines Hohlraumes im Außenwandelement über Distanzelemente mit Abstand voneinander verbunden sind, wobei in dem Hohlraum zwischen den Platten der Außenwandelemente eine Einrichtung zum Zuführen von Wärme in den Hohlraum der Außenwandelemente vorgesehen ist.

Bei einem Gattungsgemäßen Gebäude gemäß DE-19 735 298 A wird die Einrichtung zur zufuhr von Wärme im unteren Bereich von Außenwandelementen angeordnet.

In der der WO 02/22975 A1 ist für ein gattungsgemäßes Gebäude auch der Gedanke erwähnt, den Zwischenraum zwischen den Platten der wenigstens zweilagig ausgebildeten Wandelemente zum Beheizen oder zum Kühlen des Gebäudes heranzuziehen, indem die Hohlräume an ensprechende Heiz- bzw. Kühleinrichtungen angeschlossen werden.

Auch die DE 198 01 165 C schlägt vor, in einer Hohlwand eine Heizeinrichtung vorzusehen. Dabei soll die Heizeinrichtung eine Platte aufweisen, die an der zu beheizenden Wand großflächig anliegt.

Aus der CH 687 884 A ist es bekannt, im Inneren einer Holzwand Installationskanäle vorzusehen.

Der Erfindung liegt die Aufgabe zugrunde, das aus der WO 02/22975 A1 bekannte Gebäude in der Richtung weiterzubilden, das der Wärmedurchgang durch Außenwände bildende Platten wenigstens verkleinert wird.

Gelöst wird diese Aufgabe erfindungsgemäß bei einem Gebäude der eingangs genannten Gattung dadurch, daß die Einrichtung zum Zuführen von Wärme ausschließlich in einer Schwelle vorgesehen ist, auf der die Außenwandelemente aufstehen.

Bevorzugte und vorteilhafte weitere Ausgestaltungen des erfindungsgemäßen Gebäudes sind Gegenstand der Unteransprüche.

Da bei dem erfindungsgemäßen Gebäude die die Außenwände und/oder Innenwände bildenden Wandelemente mit einer Heizeinrichtung ausgestattet sind, besteht die Möglichkeit, dem Hohlraum in den Wandelementen soviel Wärme durchzuführen, dass Wärmeverluste verringert oder gerade ausgeglichen werden. Dabei ist in erster Linie nicht daran gedacht, die Wärmezufuhr durch die im Hohlraum der Wandelemente angeordneten Heizeinrichtungen so groß zu wählen, dass auch das Gebäude beheizt wird.

Weitere Einzelheiten, Merkmale und Vorteile der Erfindung ergeben sich aus der nachstehenden Beschreibung bevorzugter Ausführungsbeispiele der Erfindungen unter Bezugnahme auf die Zeichnungen.

### Es zeigt:

Fig. 1 im Schnitt und teilweise ein Wandelement eines erfindungsgemäßen Gebäudes aus zwei übereineinanderzustellenden Wandelementen,
Fig. 2 eine Einzelheit eines Wandelementes in vergrößertem Maßstab,
Fig. 2a eine Einzelheit eines Wandelementes einer abgeänderten Ausführungsform in vergrößertem Maßstab,
Fig. 2b eine andere Ausführungsform eines Wandelementes und
Fig. 2c eine dritte Ausführungsform im Bereich der Schwelle eines Wandelementes,
Fig. 3 ein Wandelement in Schrägansicht (teilweise weggebrochen),
Fig. 4 den Anschluss eines Deckenelementes an ein Wandelement in Schrägansicht (teilweise weggebrochen),
Fig. 5 einen Vertikalschnitt zu Fig. 4,
Fig. 6 einen Anschluss eines Dachelementes an ein Wandelement in Schrägansicht (teilweise weggebrochen),
Fig. 7 einen Vertikalschnitt zu Fig. 6,
Fig. 8 zwei im Firstbereich aneinandergrenzende Dachelemente in Schrägansicht (teilweise weggebrochen),
Fig. 9 einen Vertikalschnitt zu Fig. 8,
Fig. 10 in Schrägansicht zwei in einem Eckstoß aneinandergrenzende Wandelemente mit Deckenelement und Dachelement,
Fig. 11 die Ecke aus Fig. 10 in auseinandergezogener Darstellung,
Fig. 12 die Ecke aus Fig. 10 von schräg unten gesehen,
Fig. 13 die Ecke in Ansicht von Fig. 12 in auseinandergezogener Darstellung,
Fig. 14 eine andere Ausführungsform im unteren Bereich eines Wandelementes,
Fig. 15 ein Einbaubeispiel für die Ausführungsform gemäß Fig. 14,
Fig. 16 ein anderes Einbaubeispiel für die Ausführungsform gemäß Fig. 14 und
Fig. 17 ein drittes Einbaubeispiel für die Ausführungsform gemäß Fig. 14.

Ein erfindungsgemäßes Gebäude besteht in dem in den Figuren gezeigten Ausführungsbeispiel aus Außenwandelementen, Innenwandelementen, Deckenelementen und/oder Dachelementen, wobei die Elemente wenigstens zweischalig ausgebildet sind. Jedes der Elemente des erfindungsgemäßen Gebäudes besteht demnach aus wenigstens einer äußeren Platte, wenigstens einer inneren Platte und Distanzelementen, wie Distanzklötzen oder Distanzleisten, welche die Platten der Elemente mit Abstand voneinander verbinden.

Die Platten, aus denen die Außenwandelemente, Innenwandelemente, Deckenelemente und/oder Dachelemente eines erfindungsgemäßen Gebäudes bestehen, bestehen aus Holzwerkstoff, wobei Holzspanplatten im Vordergrund stehen. Bevorzugt sind im Rahmen der Erfindung Holzspanplatten, in Form von Mehrschichtplatten ("OSB-Platten"), die aus langen, schlanken, ausgerichteten Holzspänen mit vorbestimmter Form und Dicke und einem Bindemittel gefertigt sind (Mehrschichtplatten).

Die Holzspäne in den Außenschichten können parallel zur Plattenlänge oder -breite ausgerichtet sein. Die Holzspäne in der Mittelschicht können zufällig angeordnet sein, oder sind im allgemeinen rechtwinkelig zu den Holzspänen der Außenschicht ausgerichtet.

Für die Erfindung können auch Holzspanplatten aus langen, schlanken, ausgerichteten Holzspänen mit vorbestimmter Form und Dicke, die mit einem Bindemittel zu einer Einschichtplatte ("USB-Platte") verbunden sind, verwendet werden, in welchen die Orientierung der Holzspäne über die gesamte Dicke der Platte im wesentlichen einheitlich ist. Eine quergestellte Mittelschicht, wie bei den zuvor beschriebenen Mehrschichtplatten ("OSB-Platten"), ist bei diesen Holzspanplatten nicht vorgesehen.

Die Distanzelemente, wie Leisten oder Klötze, können aus Holzwerkstoff bestehen, und beispielsweise entsprechend zugeschnittene Holzspanplatten sein. Die Distanzelemente (Leisten oder Klötze) können auch Vollholzteile sein.

Bevorzugt ist es, wenn die inneren und äußeren Platten der erfindungsgemäßen Elemente mit den Distanzelementen durch Leimen verbunden sind. Schrauben, Nägel u. dgl. können auch vorgesehen sein, die aber in erster Linie dazu dienen, die erfindungsgemäßen Elemente zusammenzuhalten, bis die Leimschicht abgebunden hat.

Bei der Erfindung müssen Decke und Dach nicht unbedingt geheizt oder gekühlt werden.

Die Wandelemente sind in zwei Teilen ausgeführt, wobei ein Teil ein Schwellenelement ist, das am unteren Ende eines Wandelementes angeordnet ist. Schwellenelement und Wandelement werden nach dem Einbau zu einer Einheit, wobei die Heizung für das Haus im Schwellenelement integriert sein ist.

Im Fall von Heizelementen im Bereich der Schwellenelemente erfolgt die Wärmeleitung in den Zwischenräumen der Wandelemente durch aufsteigende und abfallende Luftsäulen.

Die Vorlauftemperatur des Heizelementes (wassergefülltes Rohr aus Metall oder Kunststoff oder Verbundstoffen) kann beispielsweise 40° bis 75°C betragen. Durch Wahl der Vorlauftemperatur wird auch die Höhe der Luftsäule bestimmt, d.h. man kann die Wand bis in die gewünschte Höhe, beispielsweise 1m Höhe, 1,5m Höhe oder 2m Höhe, erwärmen.

Beheizt werden kann das mit den erfindungsgemäßen Merkmalen ausgestattete Gebäude über Außen- und/oder Innenwände.

Vorteilhaft bei der Erfindung ist, dass es sich dabei um eine Schwerkraftheizung ohne zusätzliche Mittel zum Umwälzen der Luft (z.B. Ventilatoren) handelt. Das im erfindungsgemäßen Gebäude als Wärme abgebendes Element vorgesehene Rohr kann mit zusätzlichen Wärmeleitblechen oder -stäben ausgebildet sein, um die Wärme abgebende Oberfläche zu vergrößern.

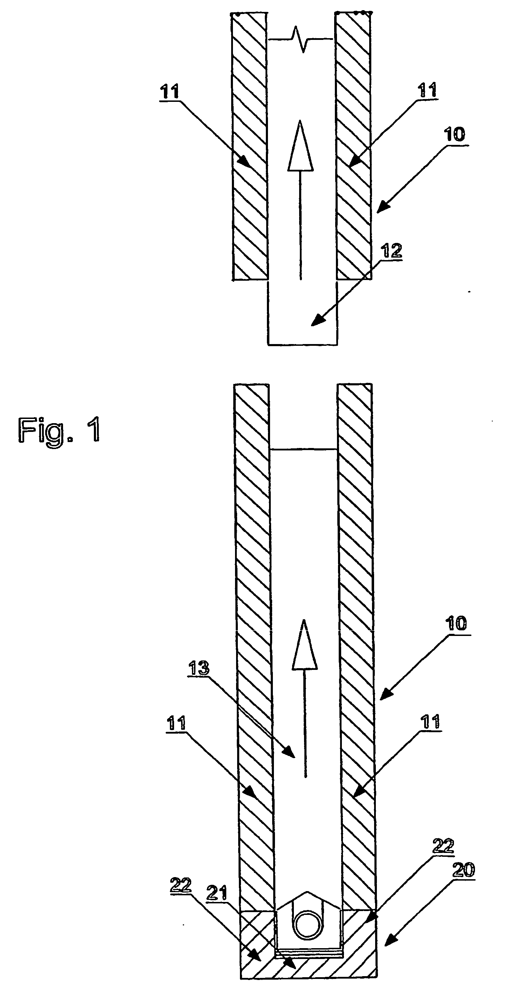

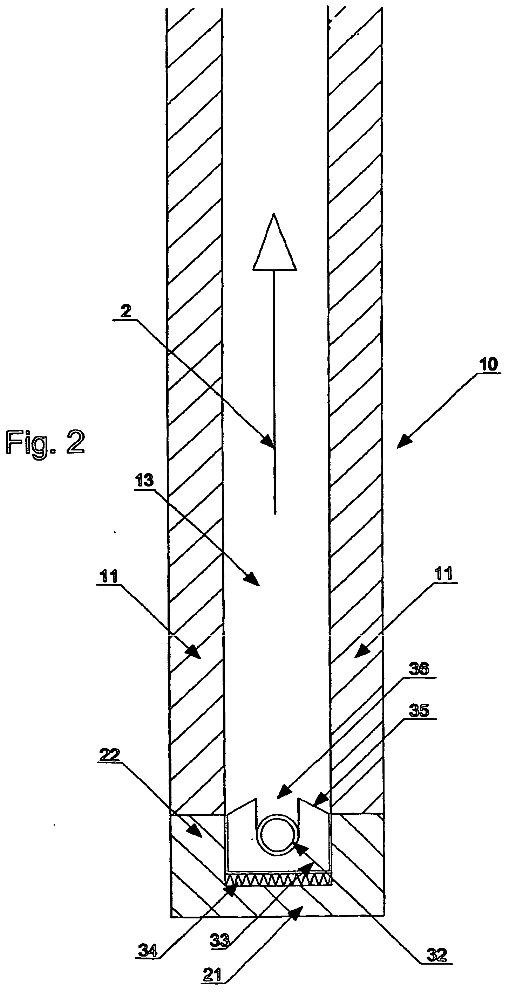

Wie Fig. 1 zeigt, können Außenwände eines erfindungsgemäßen Gebäudes aus Außenwandelementen 10 gebildet werden. Jedes Außenwandelement 10 besteht aus zwei Platten 11, die voneinander durch Distanzleisten 12 im Abstand gehalten und über die Distanzleiste 12 miteinander verbunden sind.

Das untere der beiden in Fig. 1 übereinandergestellten Außenwandelemente 10 steht auf einer Schwelle 20 auf, die aus beliebigem Werkstoff bestehen kann und beispielsweise aus Holzwerkstoff, Kunststoff, Metall oder einem mineralischen Werkstoff, wie Beton od. dgl. gefertigt sein kann.

Die Schwelle 20 hat eine im wesentlichen U-förmige Querschnittsform mit einem unteren, horizontal ausgerichteten Steg 21 und zwei Schenkeln 22, die nach oben abstehen. Die Platten 11 des unteren Außenwandelementes 10 stehen auf den nach oben weisenden Enden der Schenkel 22 der Schwelle 20 auf.

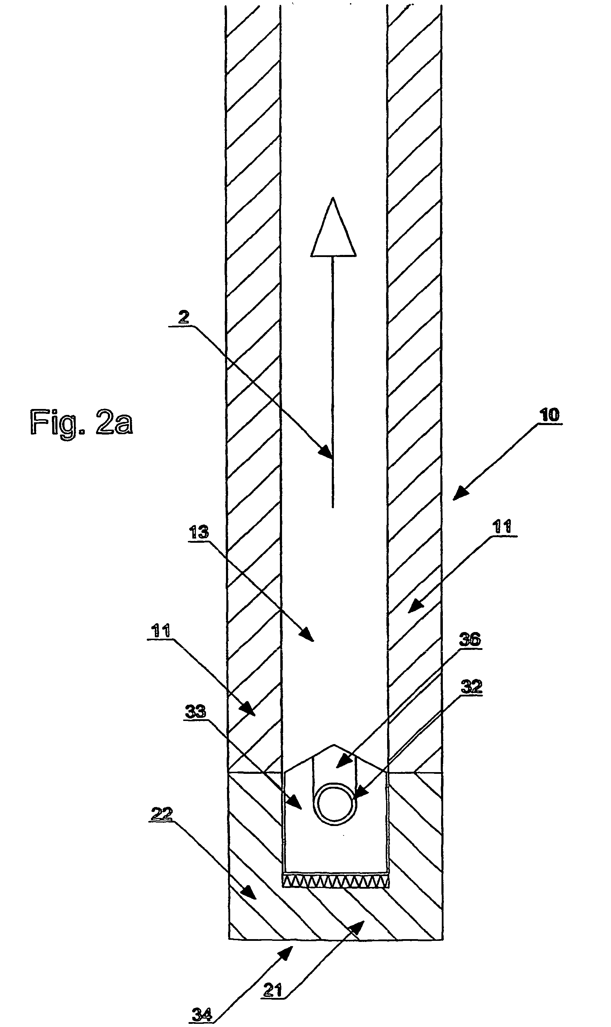

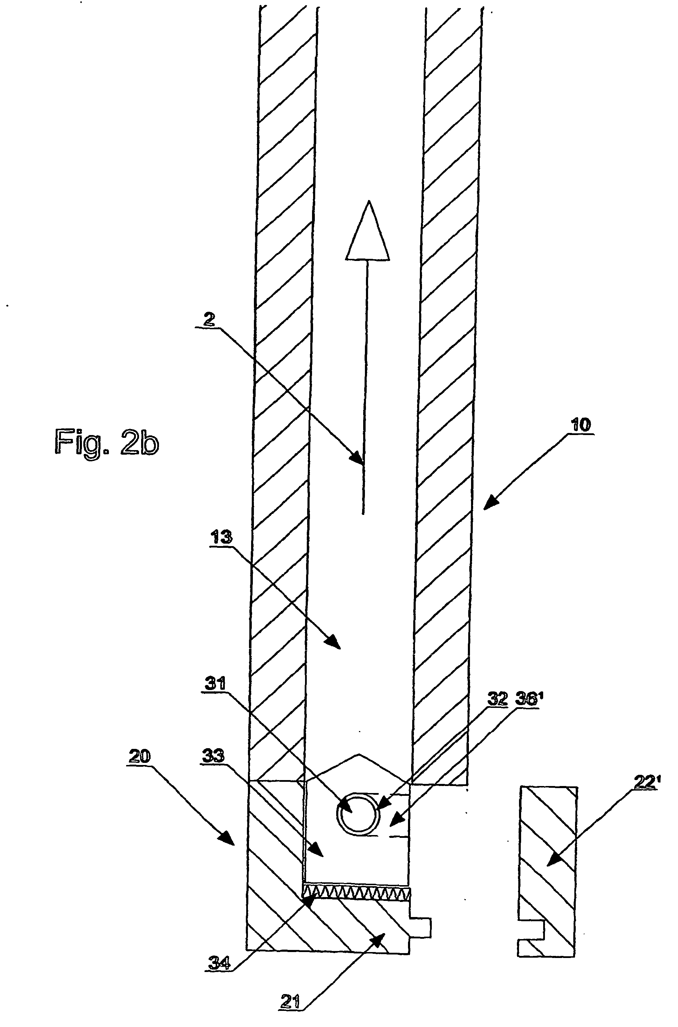

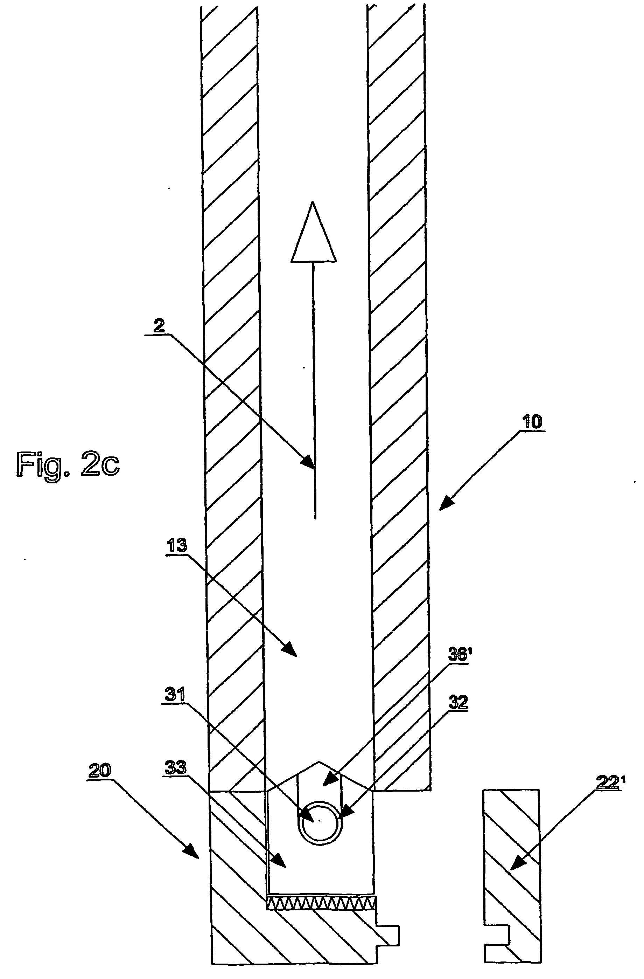

Im Bereich des nach oben offenen Hohlraumes in der Schwelle 20 ist eine Heizeinrichtung 30 vorgesehen (Fig. 2). Diese besteht aus einem Wärme abgebenden Stab 31, der im gezeigten Ausgangsbeispiel ein von einem Heizmedium durchströmtes Rohr 32 ist. Der Stab 31 liegt auf Haltern 33 auf, die ihrerseits über eine Dämmschicht 34 auf der nach oben weisenden Fläche des Steges 21 der Schwelle 20 aufstehen. Bevorzugt ist der Heizstab 31 einfach in nach oben offenen Aussparungen 36 in den Haltern 33 aufgenommen, beispielsweise eingelegt.

Die nach oben weisenden Flächen 35 der Halter 33 können, wie in den Fig. 1 und Fig. 2 bis 2c gezeigt, abgeschrägt sein, so dass die Halter 33 auch als Zentrierhilfen beim Aufsetzen der Wandelemente 10 auf die Schwellen 20 dienen.

Fig. 2 zeigt den unteren Teil der Anordnung gemäß Fig. 1 in vergrößertem Maßstab.

Bei der Ausführungsform gemäß Fig. 2a sind die beiden Schenkel 22 der Schwelle 20 und dementsprechend die Halter 33 höher ausgebildet als bei der Ausführungsform nach Fig. 2.

In Fig. 2b ist eine Ausführungsform gezeigt, bei der der eine Schenkel 22' der Schwelle 20 abnehmbar ist, so dass das Rohr 32 der Heizeinrichtung 31 von der Seite her in die zur Seite hin offenen Aussparungen 36' in den Haltern 33 auch dann eingelegt werden kann, wenn ein Wandelement 10 bereits auf die Schwelle 20 aufgestellt worden ist. Dies erlaubt es beispielsweise, nicht nur nachträglich Rohre 32 einzulegen oder auszutauschen, sondern auch Reparaturen durchzuführen.

Fig. 2c zeigt eine Abänderung der Ausführungsform von Fig. 2b, bei der die Halter 33 so wie bei der Ausführungsform nach Fig. 1 und 2 nach oben offene Aussparungen 36 zum Einlegen der Rohre 32 haben, wenngleich auch hier der Schenkel 22' der Schwelle 20 abnehmbar ausgebildet ist.

Die Rohre 32 der Heizeinrichtung 31 können gerippte Rohre 32 sein und/oder Rohre mit äußeren Ansätzen in Form von Stäben, Scheiben oder Platten, um die Wärme abgebende Fläche der Rohre 32 zu vergrößern. Wenn die Halter 33 aus Metall sind, wirken auch sie als Vergrößerungen der Wärme abgebenden Oberfläche der Rohre 32 der Heizeinrichtung 31.

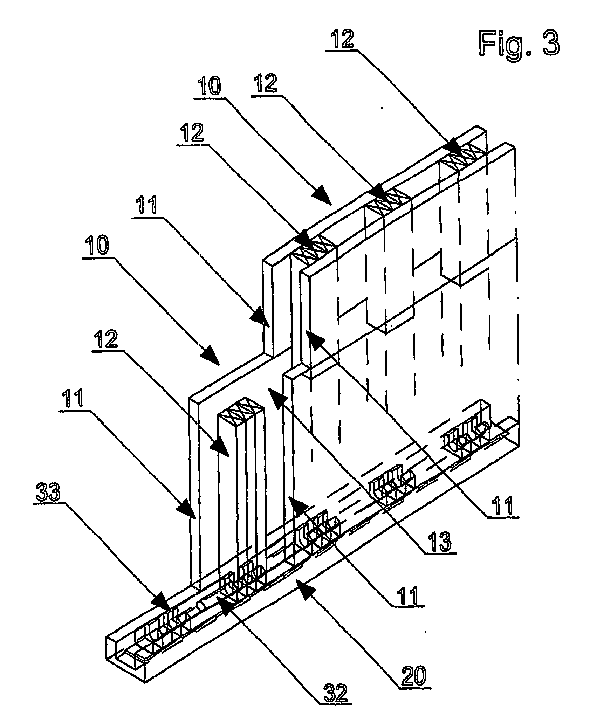

In Fig. 3 ist die Anordnung aus den zwei übereinander angeordneten Wandelementen 10 und der Schwelle 20 in Schrägansicht gezeigt, wobei auch gezeigt ist, dass die Halter 33 über die Länge der Schwelle 20 verteilt angeordnet sind, und beispielsweise in Gruppen aus mehreren (zwei) Haltern 33 zusammengefasst sind.

Durch den Heizstab 31 wird in den Hohlraum 13 zwischen den Platten 11 der Wandelemente 10 Wärme abgegeben. Dabei wird die Menge der abgegebenen Wärme bevorzugt so gewählt, dass Wärmeverluste, die auftreten würden, wenn Wärme vom Inneren eines aus Wandelementen 10 zusammengestellten Gebäudes nach außen tritt, gerade ausgeglichen werden. Es wird also gleichsam der K-Wert einer aus den Wandelementen 10 gebildeten Wand auf Null verkleinert.

Sinngemäßes kann auch für Fälle angewendet werden, bei welchen die Außentemperatur höher ist als die Temperatur im Inneren eines aus den Wandelementen 10 zusammengestellten Gebäudes, in welchem Fall eine Kühleinrichtung vorgesehen ist. Eine solche Kühleinrichtung ist bevorzugt im Bereich des oberen Endes einer aus Wandelementen 10 zusammengesetzten Wand eines Gebäudes angeordnet.

Die Halter 33 können aus beliebigem Werkstoff bestehen, bevorzugt ist es, wenn die Halter 33 aus Kunststoff oder ähnlichem oder aus Holzwerkstoff gebildet sind.

Anstelle eines mit einem Wärmemedium durchströmten Rohres 32 kann der Heizstab 31 auch ein elektrischer Widerstandheizstab oder -draht sein.

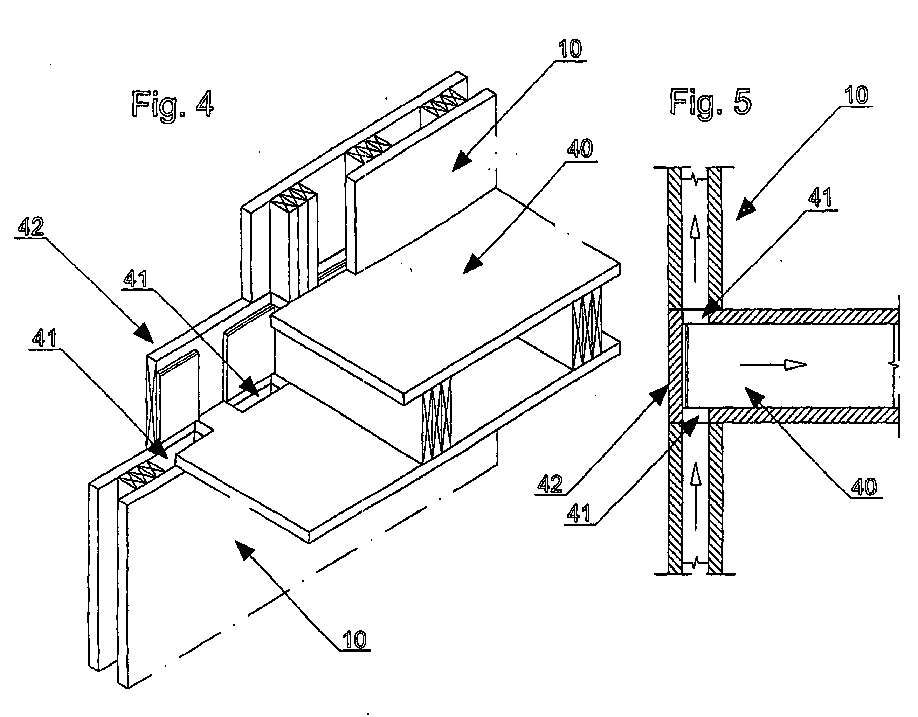

Um die in Fig. 2 durch den Pfeil 2 angedeutete Strömung erwärmter Luft durch den Hohlraum der Wandelemente 10 nach oben im Bereich von durch Deckenelemente 40 gebildeten Zwischendecken nicht zu behindern, sind, wie in den Fig. 4 und 5 gezeigt, im Anschlussbereich der Deckenelemente 40 an Außenwandelemente 10 Aussparungen 41 vorgesehen. Dies hat, wie die Fig. 4 und 5 zeigen, zur Folge, dass durch den Hohlraum 13 der Außenwandelemente 10 nach oben strömende, erwärmte Luft durch die Deckenelemente 40 nicht behindert wird, da sie durch die Aussparungen 41 nach oben strömen kann. Die seitlichen Endflächen der Deckenelemente 40 zwischen übereinanderstehenden Wandelementen 10 sind durch Verschlussplatten 42 geschlossen. Auch die Deckenelemente 40 bestehen aus zwei Platten, die miteinander auf Abstand durch Distanzleisten verbunden (verleimt) sind.

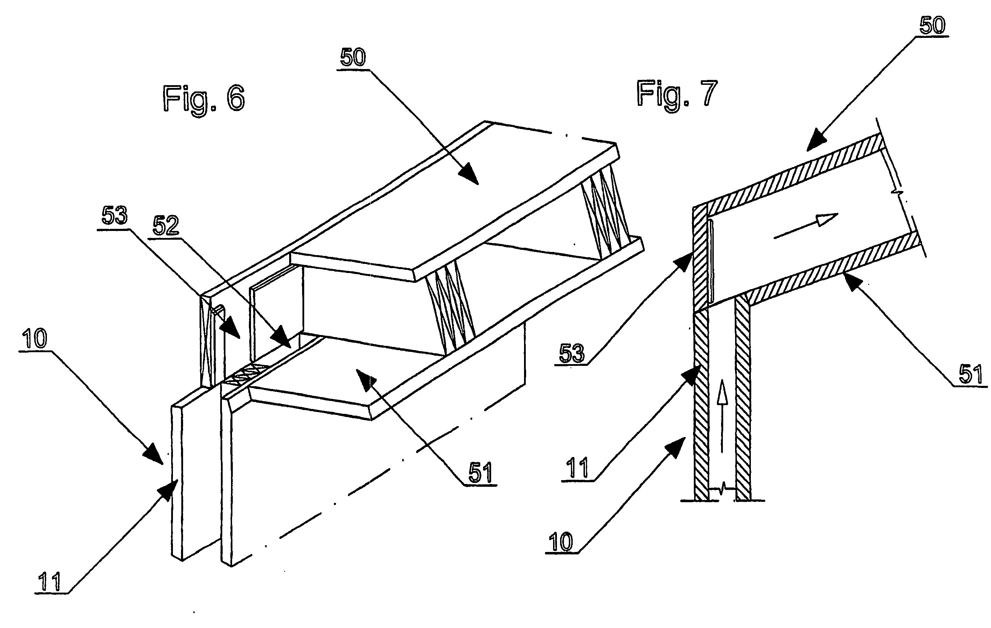

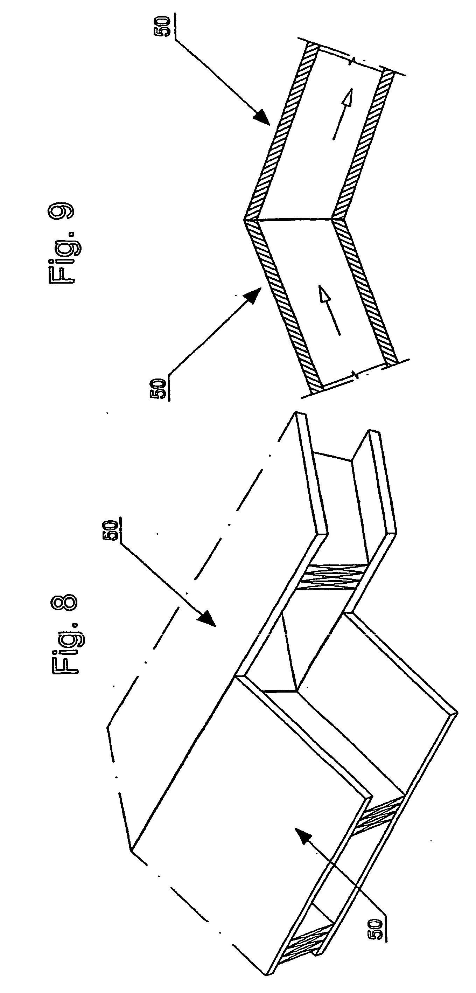

Wie die Fig. 6 und 7 zeigen, können auch Maßnahmen getroffen werden, um die durch den Hohlraum der Außenwandelemente 10 strömende, erwärmte Luft in Dachelemente 50 einströmen zu lassen, um auch dort Wärmeverluste auszugleichen, also den K-Wert auch im Dachbereich zu verkleinern oder bevorzugt auf Null abzusenken. Um dies zu erreichen, sind, wie die Fig. 6 und 7 zeigen, in den unteren Platten 51 der Dachelemente 50 Aussparungen 52 vorgesehen, so dass der Hohlraum zwischen den Platten der Dachelemente 50 mit dem Hohlraum 13 zwischen den Wandelementen 10 kommuniziert. Der Hohlraum zwischen den Platten der Dachelemente 50 ist im Bereich der äußeren Platte 11 der Wandelemente 10 durch eine Platte 53 erschlossen.

So ist gewährleistet, dass die Strömung von durch die im Bereich der Schwelle 20 angeordnete Heizeinrichtung 30 abgegebene Wärme durch die Hohlräume 13 der Außenwandelemente 10 bis in den Hohlraum von Dachelementen 50 von den Deckenelementen 40 nicht behindert wird. Auf diese Weise ist es möglich, die gesamte Außenschale eines erfindungsgemäßen Gebäudes gleichsam so zu "isolieren", dass Wärmeverluste durch die Außenschale des Gebäudes, gebildet von Wandelementen 10, Deckenelementen 40 und Dachelementen 50, verhindert werden.

Die Fig. 8 und 9 zeigen in Schrägansicht bzw. im Schnitt die Ausbildung zweier im Firstbereich aneinanderstoßender Dachelemente 50 (teilweise gezeigt), um zu zeigen, dass auch dort die Hohlräume der Dachelemente 50 miteinander kommunizieren.

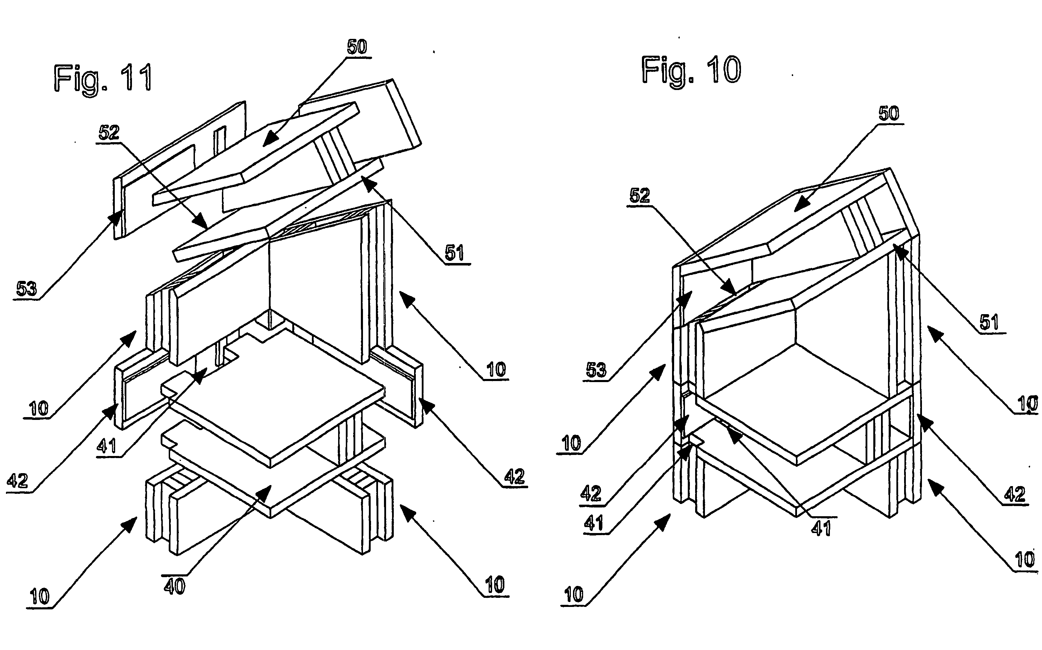

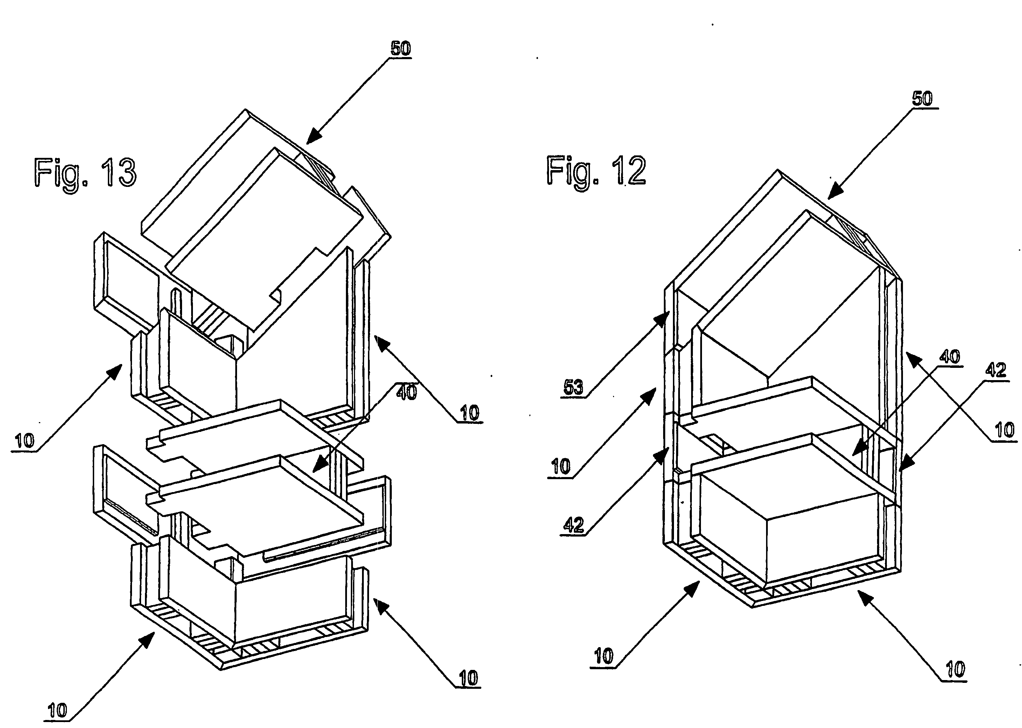

Die Fig. 10 bis 13 zeigen an einer schematisierten Darstellung eine Ecke eines erfindungsgemäßen Gebäudes mit Außenwandelementen 10, einem Deckenelement 40 und einem Dachelement 50. Die Fig. 10 bis 13 zeigen, dass die Hohlräume in den Außenwandelementen 10 mit den Hohlräumen in den Dachelementen 50 kommmunizieren können, da entsprechende Aussparungen 41 bzw. 52 im Randbereich von Deckenelement 40 und Dachelement 50 vorgesehen sind.

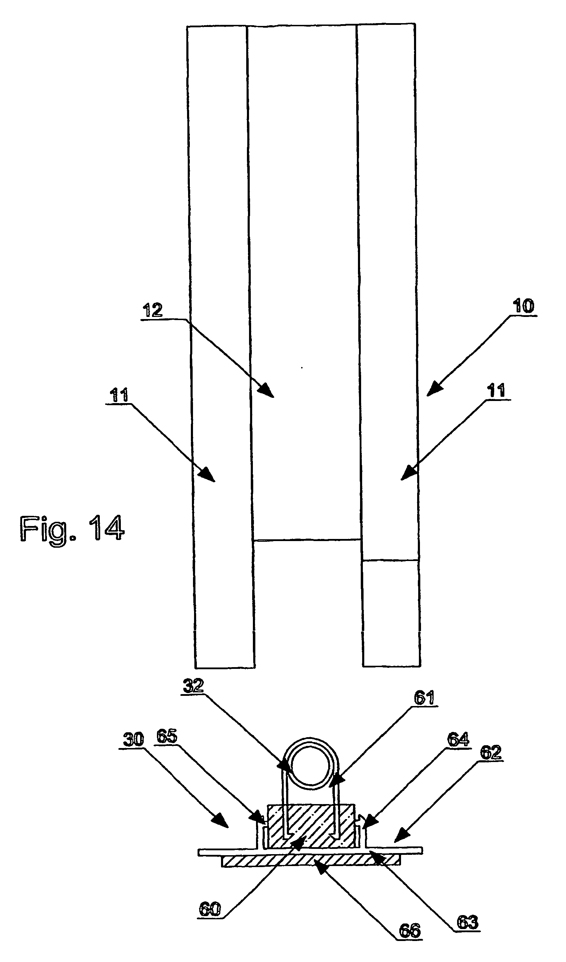

Bei der in Fig. 14 gezeigten Ausführungsform einer mit einer Heizvorrichtung 30 ausgestatteten Schwelle, auf der die Wandelemente, z.B. Außenwandelemente 10 aufstehen, ist die Heizeinrichtung 30 auf einem längslaufenden Träger 60 über Haltebügel 61 montiert. Die Haltebügel 61 sind mit ihren Schenkeln im Träger 60 verankert.

Der Träger 60 wird seinerseits von einer Profilleiste 62 getragen, die einen Steg 63 und zwei von diesen nach oben abstehende Schenkel 64 besitzt. Die Schenkel 64 liegen über Vorsprünge 65 (längslaufende Rippen oder Noppen) an den Seitenflächen des längslaufenden Trägers 60 an. Die Profilleiste 62 liegt über eine Isolierlage 60 auf einem unter ihr anzuordnendem Bauteil auf.

Die Schwelle in Fig. 14 angedeutet, ist unter einem Wandelement 10 so angeordnet, dass die Heizeinrichtung 30, insbesondere das Rohr 32 derselben, im Hohlraum 13 zwischen den Platten 11 eines Wandelementes 10 zu liegen kommt.

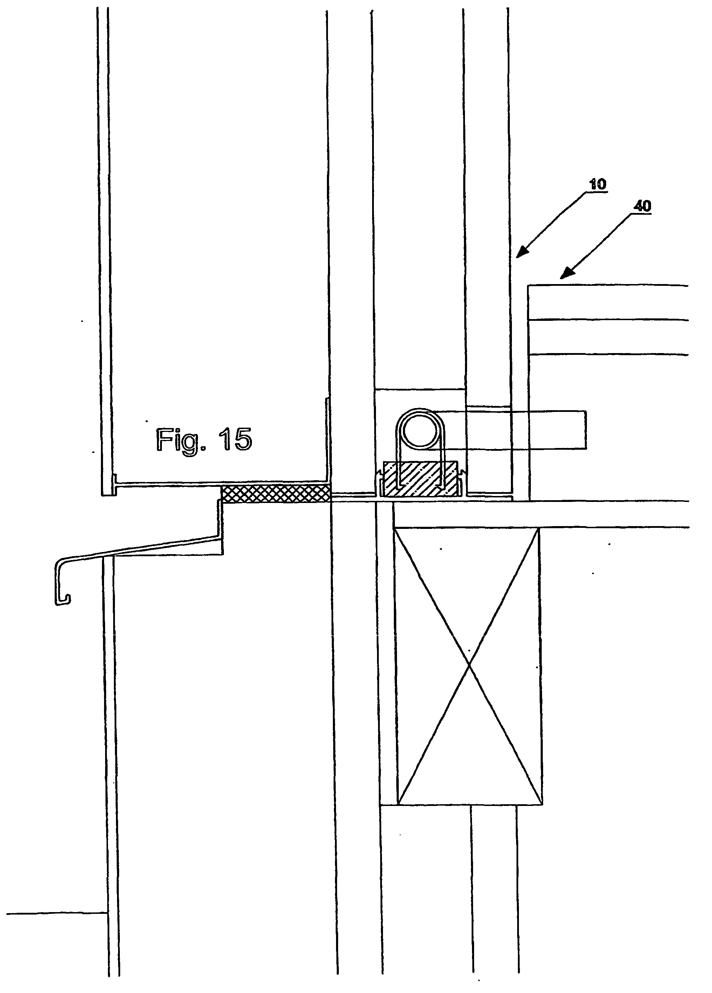

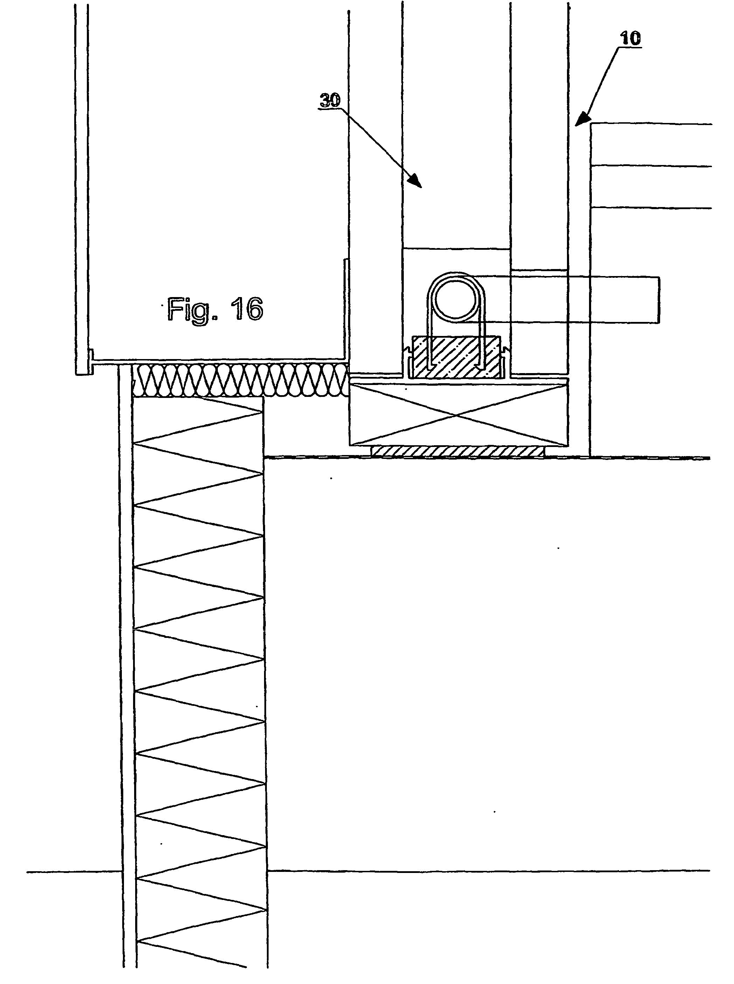

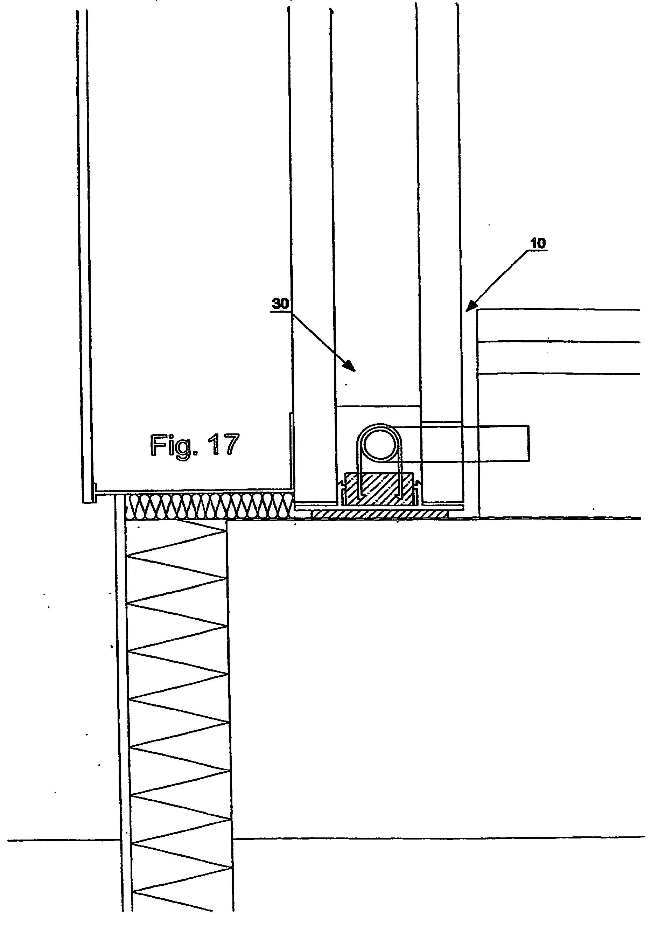

Anwendungsbeispiele für die Anordnung dieser Art der Schwelle mit der Heizeinrichtung 30 sind in den Fig. 15 bis 17 gezeigt.

Zusammenfassend kann ein Ausführungsbeispiel der Erfindung wie folgt dargestellt werden:

Ein Gebäude besteht aus zweischalig ausgebildeten Wandelementen 10 und Deckenelementen 40 sowie Dachelementen 50, die ebenfalls zweischalig ausgebildet sind. Die Wandelemente 10 stehen mit ihren unteren Enden auf Schwellen 20 auf, in denen eine Heizeinrichtung 30 vorgesehen ist. Die Heizeinrichtung 30 gibt soviel Wärme an den Hohlraum 13 zwischen den Platten 11 der Wandelemente 10 und der Deckenelemente 40, sowie der Dachelemente 50 ab, dass die Wärme, die durch Wärmedurchgang durch die Außenschale des Gebäudes verlorenginge, wenigstens teilweise, insbesondere zur Gänze, ausgeglichen wird. Im Ergebnis wird somit der Wärmedurchgang durch die Außenwände und/oder die Dachelemente 50 des Gebäudes auf Null oder nahezu auf Null verringert.

## Patentansprüche

1. Gebäude aus Außenwandelementen (10), Dachelementen (50) sowie ggf. Deckenelementen (40), wobei wenigstens die Außenwandelemente (10) zweischalig ausgebildet sind und Platten (11) aufweisen, die miteinander unter Ausbildung wenigstens eines Hohlraumes (13) im Außenwandelement (10) über Distanzelemente (12) mit Abstand voneinander verbunden sind, wobei im unteren Bereich von Außenwandelementen (10) in dem Hohlraum (13) zwischen den Platten (11) der Außenwandelemente (10) eine Einrichtung (30) zum Zuführen von Wärme in den Hohlraum der Außenwandelemente (10) vorgesehen ist, **dadurch gekennzeichnet, dass** die Einrichtung (30) zum Zuführen von Wärme ausschließlich in einer Schwelle (20) vorgesehen ist, auf der die Außenwandelemente (10) aufstehen.

2. Gebäude nach Anspruch 1, **dadurch gekennzeichnet, dass** die Schwelle (20) eine U-förmige Querschnittsform besitzt, und dass die Platten (11) der Außenwandelemente (10) auf den nach oben weisenden Schenkeln (22) der Schwelle (20) aufstehen.

3. Gebäude nach Anspruch 1 oder 2, **dadurch gekennzeichnet, dass** die Heizeinrichtung (30) eine stabförmige Wärmequelle (31) besitzt.

4. Gebäude nach Anspruch 3, **dadurch gekennzeichnet, dass** die stabförmige Wärmequelle (31) ein elektrischer Widerstandsheizstab oder Heizdraht ist.

5. Gebäude nach Anspruch 3, **dadurch gekennzeichnet, dass** die stabförmige Wärmequelle (31) ein von einem Wärmemedium durchströmtes Rohr (32) ist.

6. Gebäude nach Anspruch 3 oder 4, **dadurch gekennzeichnet, dass** die stabförmige Wärmequelle (31) in im wesentlichen U-förmige Halter (33), die in den nach oben offenen Hohlraum der Schwelle (20) eingesetzt sind, eingelegt ist.

7. Gebäude nach Anspruch 6, **dadurch gekennzeichnet, dass** zwischen den Haltern (33) und dem Steg (21) der Schwelle (20) eine Isolierlage (34) vorgesehen ist.

8. Gebäude nach Anspruch 6 oder 7, **dadurch gekennzeichnet, dass** die neben dem nach oben offenen Aufnahmeraum (36) für die stabförmige Wärmequelle (31) vorgesehenen Endflächen (35) der Halter (33) zu den Schenkeln (22) der Schwelle (20) hin abfallend ausgerichtet sind.

9. Gebäude nach Anspruch einem der Ansprüche 1 bis 8, **dadurch gekennzeichnet, dass** im Bereich von an die Außenwandelemente (10) anschließenden Deckenelementen (40) Öffnungen (41) vorgesehen sind.

10. Gebäude nach Anspruch 9, **dadurch gekennzeichnet, dass** die Öffnungen (41) in Platten des Deckenelementes (40) vorgesehen sind.

11. Gebäude nach Anspruch 9 oder 10, **dadurch gekennzeichnet, dass** die seitlichen Enden der Deckenelemente (40) durch Platten (42) verschlossen sind.

12. Gebäude nach einem der Ansprüche 1 bis 11, **dadurch gekennzeichnet, dass** in in Gebrauchslage unteren Platten von Dachelementen (50) Aussparungen (52) vorgesehen sind.

13. Gebäude nach Anspruch 12, **dadurch gekennzeichnet, dass** die seitlichen Enden der Dachelemente (50) durch Platten (53) verschlossen sind.

14. Gebäude nach Anspruch 11 oder 13, **dadurch gekennzeichnet, dass** die Verschlußplatten (42) bzw. (53) mit den äußeren Platten (11) der Wandelemente (10) fluchten.

15. Gebäude nach einem der Ansprüche 1 bis 14, **dadurch gekennzeichnet, dass** die Rohre (32) der Heizeinrichtung (30) im Bereich der Schwelle (20) durch Halter (61) mit einer im unteren Bereich des Hohlraumes (13) von Wandelementen (10) angeordneten längslaufenden Träger (60) befestigt sind.

16. Gebäude nach Anspruch 15, **dadurch gekennzeichnet, dass** der Träger (60) in einer Profilleiste (62) gehalten ist.

17. Gebäude nach Anspruch 16, **dadurch gekennzeichnet, dass** die Profilleiste (62) einen horizontalen Steg (63) besitzt, auf dem die unteren Enden der Platten (11) des Wandelementes (10) aufstehen.

18. Gebäude nach Anspruch 16 oder 17, **dadurch gekennzeichnet, dass** die Profilleiste (62) vom horizontalen Steg (63) abstehende Schenkel (64) aufweist, zwischen denen der längslaufende Träger (60) angeordnet ist.

19. Gebäude nach Anspruch 18, **dadurch gekennzeichnet, dass** die Schenkel (64) über Vorsprünge (65) an den Seitenflächen des längslaufenden Trägers (60) anliegen.

20. Gebäude nach Anspruch 19, **dadurch gekennzeichnet, dass** die Vorsprünge (65) längslaufende Rippen sind.

21. Gebäude nach Anspruch 20, **dadurch gekennzeichnet, dass** die Vorsprünge (65) noppenartige Vorsprünge sind.

## Claims

1. Building comprising external wall elements (10), roof elements (50) and also possibly ceiling elements (40), wherein at least the external wall elements (10) are double walled and have panels (11), which are joined to one another at a distance from one another via spacer elements (12) to form at least one cavity (13) in the external wall element (10), wherein in the lower region of external wall elements (10) a device (30) for supplying heat into the cavity of the external wall elements (10) is provided in the cavity (13) between the panels (11) of the external wall elements (10), **characterised in that** the device (30) for supplying heat is provided exclusively in a sill (20), on which the external wall elements (10) stand.

2. Building according to Claim 1, **characterised in that** the sill (20) has a U-shaped cross-sectional form, and that the panels (11) of the external wall elements (10) stand on the upwardly pointing legs (22) of the sill (20).

3. Building according to Claim 1 or 2, **characterised in that** the heating device (30) has a rod-shaped heat source (31).

4. Building according to Claim 3, **characterised in that** the rod-shaped heat source (31) is an electrical resistance heating element or filament heater.

5. Building according to Claim 3, **characterised in that** the rod-shaped beat source (31) is a pipe (32) with a heating medium passing through it.

6. Building according to Claim 3 or 4, **characterised in that** the rod-shaped heat source (31) is placed in essentially U-shaped holders (33), which are inserted into the upwardly open cavity of the sill (20).

7. Building according to Claim 6, **characterised in that** an insulating layer (34) is provided between the holders (33) and the crosspiece (21) of the sill (20).

8. Building according to Claim 6 or 7, **characterised in that** the end faces (35) of the holders (33) provided adjacent to the upwardly open receiving area (36) for the rod-shaped heat source (31) are oriented to slope down towards the legs (22) of the sill (20).

9. Building according to one of Claims 1 to 8, **characterised in that** openings (41) are provided in the region of ceiling elements (40) adjoining the external wall elements (10).

10. Building according to Claim 9, **characterised in that** the openings (41) are provided in panels of the ceiling element (40).

11. Building according to Claim 9 or 10, **characterised in that** the lateral ends of the ceiling elements (40) are closed off by panels (42).

12. Building according to one of Claims 1 to 11, **characterised in that** recesses (52) are provided in panels of roof elements (50) at the bottom in the position of use.

13. Building according to Claim 12, **characterised in that** the lateral ends of the roof elements (50) are closed off by panels (53).

14. Building according to Claim 11 or 13, **characterised in that** the closure panels (42) or (53) are flush with the outer panels (11) of the wall elements (10).

15. Building according to one of Claims 1 to 14, **characterised in that** in the region of the sill (20) the pipes (32) of the heating device (30) are fastened by means of holders (61) to a longitudinally running support (60) arranged in the lower region of the cavity (13) of wall elements (10).

16. Building according to Claim 15, **characterised in that** the support (60) is held in a profile ledge (62).

17. Building according to Claim 16, **characterised in that** the profile ledge (62) has a horizontal crosspiece (63), on which the lower ends of the panels (11) of the wall element (10) stand.

18. Building according to Claim 16 or 17, **characterised in that** the profile ledge (62) has legs (64) projecting from the horizontal crosspiece (63), between which legs the longitudinally extending support (60) is arranged.

19. Building according to Claim 18, **characterised in that** the legs (64) abut against the side faces of the longitudinally extending support (60) via projections (65).

20. Building according to Claim 19, **characterised in that** the projections (65) are longitudinally extending ribs.

21. Building according to Claim 20, **characterised in that** the projections (65) are nub-like projections.

## Revendications

1. Bâtiment constitué d'éléments de mur extérieur (10), d'éléments de toit (50) et le cas échéant d'éléments de plafond (40), dans lequel au moins les éléments de mur extérieur (10) sont conçus à double paroi et comportent des plaques (11) qui sont assemblées entre elles à une certaine distance l'une de l'autre grâce à des éléments d'écartement (12) en formant au moins un espace creux (13) dans l'élément de mur extérieur (10) et dans lequel il est prévu dans la partie inférieure d'éléments de mur extérieur (10) dans l'espace creux (13) entre les plaques (11) des éléments de paroi extérieur (10) un dispositif (30) pour l'amenée de chaleur dans l'espace creux des éléments de paroi extérieur (10), **caractérisé en ce que** le dispositif (30) est prévu pour amener de la chaleur exclusivement dans un embasement (20) sur lequel les éléments de paroi extérieur (10) sont dressés.

2. Bâtiment selon la revendication 1, **caractérisé en ce que** l'embasement (20) a une section transversale en forme de U et **en ce que** les plaques (11) des éléments de paroi extérieur (10) sont dressées sur les branches (22), dirigées vers le haut, de l'embasement (20).

3. Bâtiment selon la revendication 1 ou 2, **caractérisé en ce que** le dispositif de chauffage (30) a une source de chaleur (31) en forme de barre.

4. Bâtiment selon la revendication 3, **caractérisé en ce que** la source de chaleur (31) en forme de barre est une barre chauffante à résistance électrique ou un fil chauffant électrique.

5. Bâtiment selon la revendication 3, **caractérisé en ce que** la source de chaleur (31) en forme de barre est un tuyau (32) traversé par un fluide calorifique.

6. Bâtiment selon la revendication 3 ou 4, **caractérisé en ce que** la source de chaleur (31) en forme de barre est logée dans des appuis (33) qui sont globalement en forme de U et qui sont placés dans l'espace creux, ouvert vers le haut, de l'embasement (20).

7. Bâtiment selon la revendication 6, **caractérisé en ce qu'**une couche isolante (34) est prévue entre les appuis (33) et la traverse (21) de l'embasement (20).

8. Bâtiment selon la revendication 6 ou 7, **caractérisé en ce que** les surfaces terminales (35) des appuis (33), lesquelles surfaces terminales sont prévues à côté de l'espace de logement (36) ouvert vers le haut pour la source de chaleur (31) en forme de barre, sont inclinées vers les branches (22) de l'embasement (20).

9. Bâtiment selon l'une des revendications 1 à 8, **caractérisé en ce que** des ouvertures (41) sont prévues dans la zone d'éléments de plafond (40) faisant suite aux éléments de mur extérieur (10).

10. Bâtiment selon la revendication 9, **caractérisé en ce que** les ouvertures (41) sont prévues dans des plaques de l'élément de plafond (40).

11. Bâtiment selon la revendication 9 ou 10, **caractérisé en ce que** les extrémités latérales des éléments de plafond (40) sont fermées par des plaques (42).

12. Bâtiment selon l'une des revendications 1 à 11, **caractérisé en ce que** des évidements (52) sont prévus dans des plaques inférieures, en position d'usage, d'éléments de toit (50).

13. Bâtiment selon la revendication 12, **caractérisé en ce que** les extrémités latérales des éléments de toit (50) sont fermées par des plaques (53).

14. Bâtiment selon la revendication 11 ou 13, **caractérisé en ce que** les plaques de fermeture (42) resp. (53) sont alignées avec les plaques extérieures (11) des éléments de mur (10).

15. Bâtiment selon l'une des revendications 1 à 14, **caractérisé en ce que** les tuyaux (32) du dispositif de chauffage (30) sont fixés dans la zone de l'embasement (20) par des appuis (61) avec un support (60) longitudinal disposé dans la zone inférieure de l'espace creux (13) d'éléments de mur (10).

16. Bâtiment selon la revendication 15, **caractérisé en ce que** le support (60) est maintenu dans une baguette profilée (62).

17. Bâtiment selon la revendication 16, **caractérisé en ce que** la baguette profilée (62) a une traverse horizontale (63) sur laquelle les extrémités inférieures des plaques (11) de l'élément de mur (10) sont dressées.

18. Bâtiment selon la revendication 16 ou 17, **caractérisé en ce que** la baguette profilée (62) comporte des branches (64) qui s'éloignent de la traverse horizontale (63) et entre lesquelles le support longitudinal (60) est disposé.

19. Bâtiment selon la revendication 18, **caractérisé en ce que** les branches (64) s'appuient via des parties en saillie (65) contre les surfaces latérales du support longitudinal (60).

20. Bâtiment selon la revendication 19, **caractérisé en ce que** les parties en saillie (65) sont des nervures longitudinales.

21. Bâtiment selon la revendication 20, **caractérisé en ce que** les parties en saillie (65) sont des parties en saillie analogue à des boutons.
